# EUROPEAN PATENT SPECIFICATION

(11) **EP 1 966 004 B1**
(45) Date of publication and mention of the grant of the patent: **02.11.2011**
(21) Application number: 06841416.8
(22) Date of filing: 18.12.2006
(51) Int. Cl.: B60R 1/078

(54) **AUXILIARY MIRROR FOR A VEHICLE**
ZUSATZSPIEGEL FÜR EIN FAHRZEUG
RETROVISEUR AUXILIAIRE POUR VEHICULE

(30) Priority: 29.12.2005 NL 1030804
(43) Date of publication of application: 10.09.2008
(73) Proprietor: Sterping Ltd., 3905 KW Veenendaal (NL)
(72) Inventor: VAN SOLDT, René Paul, NL-3904 JX Veenendaal (NL)
(74) Representative: Klavers, Cornelis
(86) International application number: PCT/EP2006/069821
(87) International publication number: WO 2007/074096

(56) References cited:
- DE-U1- 8 531 937
- DE-U1- 20 107 944
- GB-A- 2 177 985
- NL-C2- 1 019 281
- US-A- 4 892 400
- US-A- 5 296 973
- US-A- 5 724 199
- US-A1- 2004 218 295

## Description

The present invention relates to a mirror assembly according to the pre-characterising portion of claim 1.

The present invention also relates to a method according to the pre-characterising portion of claim 12.

The invention also relates to a vehicle provided with such a mirror assembly.

A mirror assembly is known from NL-9002818. The mirror assembly that is known therefrom comprises an auxiliary mirror mounted on an arm, which is clamped down on the outside mirror of the vehicle. A strap extending in the direction of the vehicle front is disposed between the auxiliary mirror and the vehicle, which strap is attached to the vehicle body by means of a suction cup. In this way vibrations or undesired swinging back of the mirror assembly in the case of a strong air flow are prevented.

A mirror assembly from which the enclosed claims are delimited is known from US-5,724,199. This assembly comprises a mounting bracket to be attached to the auxiliary mirror on the one hand, which mounting bracket can on the other hand be fixed to the outside mirror by clamping means comprising at least one clamping strap, and at least one spacer, which is provided between the outside mirror and said at least one clamping strap. The clamping strap has holes for coupling to stubs or studs in a binding device of the clamping means. The binding device comprises a retaining rod and a vacuum mount as spacer coupled to the retaining rod.

A drawback of the known mirror assemblies is that the outside mirror of the vehicle is easily damaged when the auxiliary mirror is mounted to the outside mirror with sufficient clamping force.

The object of the present invention is to provide an improved, universally usable mirror assembly, wherein the occurrence of damage, inter alia upon mounting, dismounting or moving the auxiliary mirror to/from/over the outside mirror is prevented.

In order to accomplish that object, the mirror assembly according to the invention is **characterised in that** the spacer is provided with an opening through which the clamping strap can move.

Accordingly, the method according to the invention is **characterised in that** the spacer is provided with an opening through which the clamping strap can move when the clamping strap is fixed to the outside mirror.

When the clamping strap is fixed to the outside mirror, the clamping strap can easily move over the clamping strap guide and/or through the opening in the spacer, as a result of which no twisting or torsional load will be exerted on the spacer. This prevents the assembly from being moved out of alignment

A further advantage of the mirror assembly according to the present invention is that the provision of one or more spacers between the outside mirror and the clamping strap makes it possible to select the position on the outside surface of the outside mirror where the clamping force exerted on the outside mirror is concentrated. The spacer may for example be provided on the underside of the outside mirror, which is usually a short, strong side.

Several spacers may be provided at desired pressure points on the outside surface, irrespective of the specific shape of the outside mirror in question. Spacers provided at suitably selected and stable pressure points reduce any vibrations and prevent the assembly from vibrating loose.

The assembly will remain firmly clamped down on the outside mirror and will not come loose even if the assembly should swing back, because of the presence of the spacer(s), which will take up additional force in that case, which enhances the degree of safety and reliability of the assembly according to the invention.

The mirror assembly is furthermore universally usable, as it is not only suitable for use with one or more prescribed shapes of the outside mirror.

In contrast to the aforesaid prior art, the mirror assembly according to the invention need not necessarily be provided with a strap extending in the direction of the vehicle front to prevent vibrations or a swinging back of the assembly.

In possible embodiments of the mirror assembly, the spacer is elastic and/or is elastically supported on the vehicle body, thereby ensuring as much as possible that the absorption and transmission of forces to the outside mirror via the spacer(s) will not take place in jerks. This prevents damage to the outside mirror, in particular in the case of shock loads, whilst it also prevents the mirror assembly according to the invention from undesirably coming loose.

If the spacer is configured as a suction unit, a suction cup or a force suction unit, it is furthermore possible to mount and dismount the assembly in a simple manner.

Another embodiment of the assembly according to the invention is **characterised in that** the spacer is provided with a clamping strap guide, with the spacer in particular being provided with an opening through which the clamping strap can move.

When the clamping strap is fixed to the outside mirror, the clamping strap can easily move over the clamping strap guide and/or through the opening in the spacer, as a result of which no twisting or torsional load will be exerted on the spacer. This prevents the assembly from being moved out of alignment.

In accordance with the object of the invention, further damage to the outside mirror and/or the vehicle caused by the mirror assembly swinging back is prevented by providing the auxiliary mirror with an impact-resistant circumferential edge, so that the auxiliary mirror will strike against the window or the outside surface of the vehicle with the impact-absorbing circumferential edge thereof, provided that the assembly is correctly mounted.

The mirror assembly according to the present invention will now be explained in more detail with reference to the figures below, in which like parts are indicated by the same numerals. In the drawings:
Figures 1A and 1B are perspective views of the mirror assembly according to the invention;
Figures 2A and 2B are a front view and a side view, respectively, of the mirror assemblies of figures 1A and 1B; and
Figure 3 is a cross-sectional view of an embodiment of the spacer for use in the assemblies of figures 1A, 1B, 2A and 2B.

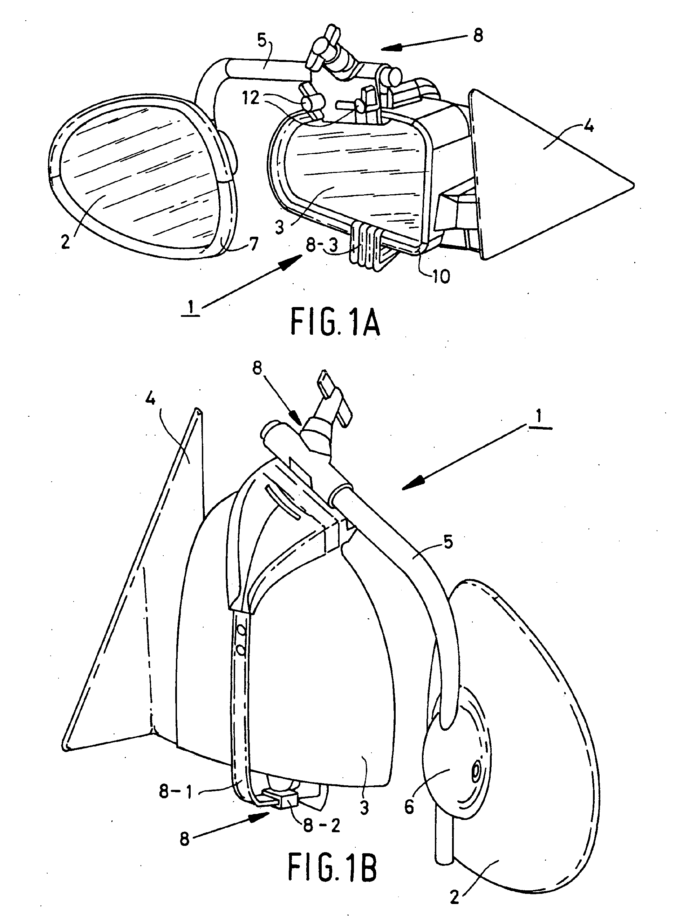

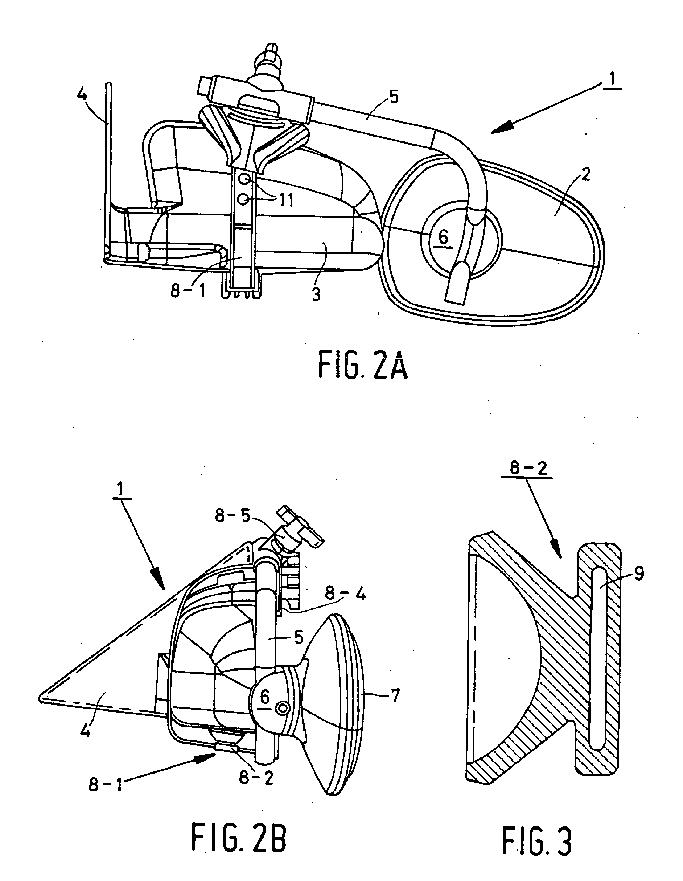

Each of the figures 1A, 1B, 2A and 2B shows a mirror assembly 1, which is suitable for mounting an auxiliary mirror 2 to an outside mirror 3 attached to the surface (schematically shown) of a vehicle 4. Besides the auxiliary mirror 2, the assembly 1 comprises a mounting bracket 5 to be attached to one side of the auxiliary mirror 2. Means of attachment 6 are to that end provided on the rear side of the auxiliary mirror 2, which means of attachment enable adjustment and/or rotation of the auxiliary mirror 2 in several independent directions relative to the mounting bracket 5. The auxiliary mirror 2 has a circumferential edge 7. The other side of the mounting bracket 5 is connected to the outside mirror 3 by clamping means 8, being adjustable in angular and longitudinal direction. The circumferential edge 7 can be so positioned with the aid of the means 6 and 8 that the circumferential edge 7 is positioned behind the plane of the outside mirror 3 and/or the clamping means 8, seen in the driving direction of the vehicle 4 (see figure 2B). If the circumferential edge 7 is thickened, which thickening will usually be made of an elastic bumper, possibly filled with air, or a foam material, the impact-resistant circumferential edge 7 will elastically impact with the window or the column of the vehicle 4 to which it is mounted if the mirror 3 swings back, for example under the influence of the wind load while driving or upon impacting with a mirror of an oncoming vehicle, without causing any significant damage thereto, however, or being damaged itself.

In the illustrated embodiment, the clamping means 8 comprise a clamping strap 8-1. Disposed between the clamping strap 8-1 and, in this case, the underside of the outside mirror 3 is at least one spacer 8-2. In practice the spacer 8-2 will generally be made of an at least partially elastic material, which makes it possible for the spacer 8-2 to be elastically supported directly or indirectly on the outside surface of the outside mirror 3. Preferably, the spacer 8-2 is configured as a suction unit that can be detached from the outside mirror 3, or as a solid, resilient, so-called force suction unit.

The spacer 8-2, which is shown in greater detail in figure 3, is provided with a clamping strap guide in the form of a corresponding elongated opening 9, through which the clamping strap 8-1, which is preferably securely made in one piece, is movable.

The further parts of the clamping means 8, which are yet to be discussed below, are positioned at the upper side of the outside mirror 3 in the various figures. Clamping jaws 8-3 present at at least one end of the clamping strap 8-1 engage a circumferential edge 10 of the outside mirror 3. The other end of the clamping strap 8-1 is formed by a part of the clamping strap 8-1 yet to be made to measure, which can be placed into clamping, adjustable engagement with hooks (not shown in the figures) by means of eyes 11 formed therein. Adjustment of the clamping engagement of the clamping strap 8-1 on the outside surface of the outside mirror 3 is effected by a clamping jaw 8-4, which in this case also engages the circumferential edge 10 of the outside mirror 3, which is provided with wing nuts 12, which can be easily turned by hand for that purpose. Said one or more spacers 8-2 will elastically deform - uniformly - when the wing nuts 12 are being tightened and the clamping strap 8-1 clamps down on the circumferential edge 10, in such a manner as to conform to the shape of the outside mirror 3 in question.

As is shown inter alia in figure 2B, it is preferred to provide the clamping means 8 with at least one clamping bolt 8-5, as present on the clamping jaw 8-4 in this case, by means of which the adjustable (as regards its position) connection to the other end of the mounting bracket 5 can be effected. If the clamping bolt 8-5 is disposed at an angle of about 45 degrees to the vertical, it will project less far in rearward direction, i.e. in the driving direction, than the circumferential edge 7 of the outside mirror 3, so that in particular the clamping bolt 8-5 of the clamping means 8 will not come into contact with the window or the column of the vehicle 4 in the unhoped-for event of the assembly 1 swinging back.

## Claims

1. A mirror assembly (1) for mounting an auxiliary mirror (2) to an outside mirror (3) of a vehicle (4), comprising:
- a mounting bracket (5) to be attached to the auxiliary mirror (2) on the one hand, which mounting bracket (2) can on the other hand be fixed to the outside mirror (3) by clamping means (8; 8-1, 8-2, 8-3, 8-4, 8-5) comprising at least one clamping strap (8-1), and
- at least one spacer (8-2), which is provided between the outside mirror (3) and said at least one clamping strap (8-1),
**characterized in that** the spacer (8-2) is provided with an opening (9) through which the clamping strap (8-1) can move.

2. An assembly (1) according to claim 1, **characterized in that** the spacer (8-2) provided is at least partially composed of an elastic material.

3. An assembly (1) according to claim 1 or 2, **characterized in that** the spacer (8-2) is configured as a holder that is elastically supported on the outside mirror (3).

4. An assembly (1) according to any one of the claims 1-3, **characterized in that** the spacer is configured as a suction unit (8-2) that can be detached from the outside mirror (3).

5. An assembly (1) according to claim 4, **characterized in that** said suction unit is a force suction unit (8-2).

6. An assembly (1) according to any one of the claims 1-5, **characterized in that** the spacer (8-2) is provided with a clamping strap guide (8-2).

7. An assembly (1) according to any one of the claims 1-6, **characterized in that** said at least one clamping strap (8-2) is in one piece.

8. An assembly (1) according to any one of the claims 1-7, **characterized in that** the auxiliary mirror (2) has a circumferential edge (7) which, seen in driving direction, is located behind the plane of the outside mirror (3) and/or the clamping means (8; 8-1, 8-2, 8-3, 8-4, 8-5).

9. An assembly (1) according to claim 8, **characterized in that** said circumferential edge (7) is thickened.

10. An assembly (1) according to claim 8 or 9, **characterized in that** said circumferential edge (7) comprises an elastic buffer, possibly filled with air, or a foam material.

11. An assembly (1) according to any one of the claims 1-11, **characterized in that** the clamping means (8; 8-1, 8-2, 8-3, 8-4, 8-5) are provided with at least one clamping bolt (8-5), which is disposed at an angle of about 45 degrees to the vertical.

12. A method wherein an auxiliary mirror (2) is mounted to an outside mirror (3) of a vehicle (4) by placing ends of a clamping strap (8-1) into engagement with the circumferential edge (10) of the outside mirror (3) by using clamping means (8; 8-1, 8-2, 8-3, 8-4, 8-5), and wherein at least one spacer (8-2) provided between the outside mirror (3) and said at least one clamping strap (8-1) clamps down on the outside mirror (3) under elastic deformation upon fixation of the clamping means (8; 8-1, 8-2, 8-3, 8-4, 8-5), **characterized in that** the spacer (8-2) is provided with an opening (9) through which the clamping strap (8-1) can move when the clamping strap (8-1) is fixed to the outside mirror (3).

13. A vehicle (4) provided with an assembly (1) according to any one of the claims 1-11.

## Patentansprüche

1. Spiegelbaugruppe (1) zum Anbringen eines Zusatzspiegels (2) an einem Außenspiegel (3) eines Fahrzeugs (4), die Folgendes umfasst:
- einen Befestigungsbügel (5), der einerseits an dem Zusatzspiegel (2) zu befestigen ist, wobei der Befestigungsbügel (5) andererseits durch Klemm-Mittel (8; 8-1, 8-2, 8-3, 8-4, 8-5), die wenigstens ein Klemmband (8-1) umfassen, an dem Außenspiegel (3) befestigt werden kann, und
- wenigstens ein Abstandsstück (8-2), das zwischen dem Außenspiegel (3) und dem wenigstens einen Klemmband (8-1) bereitgestellt wird,
**dadurch gekennzeichnet, dass** das Abstandsstück (8-2) mit einer Öffnung (9) versehen ist, durch die sich das Klemmband (8-1) bewegen kann.

2. Baugruppe (1) nach Anspruch 1, **dadurch gekennzeichnet, dass** das bereitgestellte Abstandsstück (8-2) wenigstens teilweise aus einem elastischen Werkstoff besteht.

3. Baugruppe (1) nach Anspruch 1 oder 2, **dadurch gekennzeichnet, dass** das Abstandsstück (8-2) als eine Halterung konfiguriert ist, die elastisch an dem Außenspiegel (3) getragen wird.

4. Baugruppe (1) nach einem der Ansprüche 1-3, **dadurch gekennzeichnet, dass** das Abstandsstück als eine Saugeinheit (8-2) konfiguriert ist, die von dem Außenspiegel (3) gelöst werden kann.

5. Baugruppe (1) nach Anspruch 4, **dadurch gekennzeichnet, dass** die Saugeinheit eine Kraftsaugeinheit (8-2) ist.

6. Baugruppe (1) nach einem der Ansprüche 1-5, **dadurch gekennzeichnet, dass** das Abstandsstück (8-2) mit einer Klemmbandführung (8-2) versehen ist.

7. Baugruppe (1) nach einem der Ansprüche 1-6, **dadurch gekennzeichnet, dass** das wenigstens eine Klemmband (8-1) in einem Stück vorliegt.

8. Baugruppe (1) nach einem der Ansprüche 1-7, **dadurch gekennzeichnet, dass** der Zusatzspiegel (2) eine Umfangskante (7) hat, die, gesehen in Fahrtrichtung, hinter der Ebene des Außenspiegels (3) und/oder der Klemm-Mittel (8; 8-1, 8-2, 8-3, 8-4, 8-5) angeordnet ist.

9. Baugruppe (1) nach Anspruch 8, **dadurch gekennzeichnet, dass** die Umfangskante (7) verdickt ist.

10. Baugruppe (1) nach Anspruch 8 oder 9, **dadurch gekennzeichnet, dass** die Umfangskante (7) einen elastischen Puffer, möglicherweise mit Luft oder einem Schaummaterial gefüllt, umfasst.

11. Baugruppe (1) nach einem der Ansprüche 1-10, **dadurch gekennzeichnet, dass** die Klemm-Mittel (8; 8-1, 8-2, 8-3, 8-4, 8-5) mit wenigstens einem Klemmbolzen (8-5) versehen sind, der in einem Winkel von etwa 45 Grad zu der Vertikalen angeordnet ist.

12. Verfahren, wobei ein Zusatzspiegel (2) an einem Außenspiegel (3) eines Fahrzeugs (4) angebracht wird durch das Bringen der Enden eines Klemmbandes (8-1) in Eingriff mit der Umfangskante (10) des Außenspiegels (3) durch die Verwendung von Klemm-Mitteln (8; 8-1, 8-2, 8-3, 8-4, 8-5) und wobei wenigstens ein Abstandsstück (8-2), das zwischen dem Außenspiegel (3) und dem wenigstens einen Klemmband (8-1) auf die Befestigung der Klemm-Mittel (8; 8-1, 8-2, 8-3, 8-4, 8-5) hin an dem Außenspiegel (3) unter elastischer Verformung nieder klemmt, **dadurch gekennzeichnet, dass** das Abstandsstück (8-2) mit einer Öffnung (9) versehen ist, durch die sich das Klemmband (8-1) bewegen kann, wenn das Klemmband (8-1) an dem Außenspiegel (3) befestigt wird.

13. Fahrzeug (4), das mit einer Baugruppe (1) nach einem der Ansprüche 1-11 versehen ist.

## Revendications

1. Ensemble de miroir (1) pour monter un miroir auxiliaire (2) sur un miroir extérieur (3) d'un véhicule (4), comprenant :
- un support de montage (5) à fixer sur le miroir auxiliaire (2) d'une part, lequel support de montage (2) peut d'autre part être fixé au miroir extérieur (3) par des moyen de bridage (8 ; 8-1, 8-2, 8-3, 8-4, 8-5) comprenant au moins une sangle de bridage (8-1), et
- au moins une entretoise (8-2), qui est prévue entre le miroir extérieur (3) et ladite au moins une sangle de bridage (8-1),
**caractérisé en ce que** l'entretoise (8-2) est pourvue d'une ouverture (9) à travers laquelle la sangle de bridage (8-1) peut se déplacer.

2. Ensemble (1) selon la revendication 1, **caractérisé en ce que** l'entretoise (8-2) prévue est au moins partiellement composée d'un matériau élastique.

3. Ensemble (1) selon la revendication 1 ou 2, **caractérisé en ce que** l'entretoise (8-2) est configurée comme un support qui est supporté élastiquement sur le miroir extérieur (3).

4. Ensemble (1) selon une quelconque des revendications 1 à 3, **caractérisé en ce que** l'entretoise est configurée comme une unité d'aspiration (8-2) qui peut être détachée du miroir extérieur (3).

5. Ensemble (1) selon la revendication 4, **caractérisé en ce que** ladite unité d'aspiration est une unité d'aspiration de force (8-2).

6. Ensemble (1) selon une quelconque des revendications 1 à 5, **caractérisé en ce que** l'entretoise (8-2) est prévue avec un guide de sangle de bridage (8-2).

7. Ensemble (1) selon une quelconque des revendications 1 à 6, **caractérisé en ce que** ladite au moins une sangle de bridage (8-2) est en un seul tenant.

8. Ensemble (1) selon une quelconque des revendications 1 à 7, **caractérisé en ce que** le miroir auxiliaire (2) a un bord circonférentiel (7) qui, vu en direction menante, est situé derrière le plan du miroir extérieur (3) et/ou le moyen de bridage (8 ; 8-1, 8-2, 8-3, 8-4, 8-5).

9. Ensemble (1) selon la revendication 8, **caractérisé en ce que** ledit bord circonférentiel (7) est épaissi.

10. Ensemble (1) selon la revendication 8 ou 9, **caractérisé en ce que** ledit bord circonférentiel (7) comprend un tampon élastique, éventuellement rempli avec de l'air, ou un matériau mousse.

11. Ensemble (1) selon une quelconque des revendications 1 à 10, **caractérisé en ce que** les moyens de bridage (8 ; 8-l, 8-2, 8-3, 8-4, 8-5) sont prévus avec au moins un boulon de fixation (8-5), qui est disposé à un angle d'environ 45 degrés par rapport à la verticale.

12. Procédé dans lequel un miroir auxiliaire (2) est monté sur un miroir extérieur (3) d'un véhicule (4) en plaçant des extrémités d'une sangle de bridage (8-1) en prise avec le bord circonférentiel (10) du miroir extérieur (3) en utilisant des moyens de bridage (8 ; 8-1, 8-2, 8-3, 8-4, 8-5), et dans lequel au moins une entretoise (8-2) prévue entre le miroir extérieur (3) et ladite au moins une sangle de bridage (8-1) a une action de serre-flan sur le miroir extérieur (3) sous déformation élastique lors de la fixation des moyens de bridage (8 ; 8-1, 8-2, 8-3, 8-4, 8-5), **caractérisé en ce que** l'entretoise (8-2) est pourvue d'une ouverture (9) à travers laquelle la sangle de bridage (8-1) peut se déplacer quand la sangle de bridage (8-1) est fixée au miroir extérieur (3).

13. Véhicule (4) pourvu d'un ensemble (1) selon une quelconque des revendications 1 à 11.
